# EUROPÄISCHE PATENTSCHRIFT

(11) **EP 3 101 447 B1**
(45) Veröffentlichungstag und Bekanntmachung des Hinweises auf die Patenterteilung: **30.09.2020**
(21) Anmeldenummer: 16172088.3
(22) Anmeldetag: 31.05.2016
(51) Int. Cl.: G01T 1/02

(54) **DOSISMESSGERÄT UND VERFAHREN ZUR BESTIMMUNG EINER STRAHLENDOSIS**
DOSE MEASURING DEVICE AND METHOD FOR DETERMINING A RADIATION DOSE
DOSIMETRE ET PROCEDE DE DETERMINATION D'UNE DOSE DE RADIATION

(30) Priorität: 01.06.2015 DE 102015210059
(43) Veröffentlichungstag der Anmeldung: 07.12.2016
(73) Patentinhaber: Karlsruher Institut für Technologie, 76131 Karlsruhe (DE)
(72) Erfinder:
(74) Vertreter: Altmann Stößel Dick Patentanwälte PartG mbB

(56) Entgegenhaltungen:
- DE-B- 1 244 971
- DE-B3-102007 054 927
- US-A- 3 567 934
- US-A- 3 789 227
- US-B1- 7 781 747
- BILSKI P ET AL: "The newdosemeter for measurements of(3) for medical staff", RADIATION MEASUREMENTS, Bd. 46, Nr. 11, 1. November 2011 (2011-11-01), Seiten 1239-1242, XP028329847, ISSN: 1350-4487, DOI: 10.1016/J.RADMEAS.2011.04.031 [gefunden am 2011-05-04]

## Beschreibung

### Gebiet der Erfindung

Die vorliegende Erfindung ist insbesondere im Bereich der Dosimetrie angesiedelt. Die Erfindung betrifft ein Dosismessgerät zur Erfassung mindestens einer Messgröße Hₚ(3) an einer Augenlinse, ein Stirnband und eine Dosismessvorrichtung, welche mindestens ein derartiges Dosismessgerät umfassen, sowie ein Verfahren zur Bestimmung mindestens einer Messgröße Hₚ(3) an einer Augenlinse. Insbesondere kann das erfindungsgemäße Dosismessgerät bei amtlichen und/oder nichtamtlichen Messstellen, welche Dosismessgeräte an strahlenexponiertes Personal ausgeben, angewandt werden. Einsatzbereiche sind beispielsweise in der interventionellen Radiologie, Kardiologie, Urologie, oder Nuklearmedizin sowie im Bereich des Betriebs und der Überwachung kerntechnischer Anlagen zu finden. Auch andere Anwendungsmöglichkeiten sind grundsätzlich denkbar.

### Stand der Technik

Im Bereich des Strahlenschutzes ist eine Vielzahl von Dosismessgeräten, d.h. Messgeräten zur Erfassung einer Dosis, die durch eine externe Strahlenexposition bewirkt wird, bekannt. Derartige Dosismessgeräte werden insbesondere für eine Quantifizierung von Auswirkungen ionisierender Strahlung auf Menschen und/oder auf weitere Lebewesen angewandt.

Dosismessgeräte können beispielsweise für eine Messung einer Hautdosis angewandt werden. So beschreibt die EP 2 469 304 A2 einen Detektor zur Messung der Richtungs-Äquivalentdosis H'(0,007, Ω). Die Richtungs-Äquivalentdosis *H*'(0,007, Ω) dient zur Abschätzung einer Hautdosis.

Beispielsweise können derartige Dosismessgeräte an einem Fingerring getragen werden. So beschreibt die DE 196 43 317 A1 eine Fingerring-Dosimetersonde, welche aus einem Gehäuse mit zwei direkt am Gehäuse angebrachten Schenkeln und einem Thermolumineszenzdetektor, der in einer Ausnehmung des Gehäuses gehaltert wird, besteht.

Zur Abschätzung einer Augenlinsen-Personendosis werden Dosimeter für die Messgröße *H*ₚ(3) empfohlen. Im Allgemeinen gilt eine Augenlinse als ein sehr strahlenempfindliches Organ. Insbesondere kann eine Trübung der Augenlinse eine Folge einer Strahlenbelastung durch ionisierende Strahlung sein. Dieser Effekt wird üblicherweise als "Katarakt" bezeichnet. Die *International Commission on Radiological Protection* (ICRP) hat daher spezielle Dosisgrenzwerte für die Augenlinse empfohlen, welche in der Strahlenschutzverordnung und der Röntgenverordnung in Form einer gesetzlichen Regelung enthalten sind. Hierbei wurde unter anderem auch eine Messgröße *H*ₚ(3) festgelegt, welche eine Äquivalentdosis in einer Tiefe von 3 mm in einem Gewebe unterhalb einer Stelle, an welcher sich die Dosismessvorrichtung befindet, wiedergibt. Die Messgröße *H*ₚ(3) kann daher dazu geeignet sein, um eine Dosis für die Augenlinsen, die von 2 mm bis 4 mm hinter der Hornhaut liegt, zu erfassen. Weitere Definitionen in Bezug auf Begriffe der Dosimetrie finden sich in der Norm DIN 6814-3: 2014-03, *Begriffe in der radiologischen Technik,* Teil 3: *Dosimetrie.*

US 7,781,747 B1 offenbart, in einem Dosismessgerät für den Filter die Materialien Tantal und Stahl zu kombinieren. Diese Kombination wird dazu verwendet, um auf diese Weise ein kombiniertes Gleichgewichts- und Energiekompensationsfilter bereitzustellen.

US 3 567 934 A offenbart, in einem Dosismessgerät eine Plakette aus zwei, fest miteinander verbundenen Bestandteilen als Filter vorzusehen. Hierbei wird vorgeschlagen, die Plakette als Detektorelement aus einem Plastikmaterial, insbesondere Polypropylen auszugestalten. Darüber hinaus können Filter aus Aluminium oder einer Kombination aus Zinn und Blei vorgesehen sein. Diese Anordnungen lösen das Problem, eine Belichtung des Nachweisfilms außer durch die gefilterte Strahlung zu vermeiden.

US 3 789 227 A offenbart, in einem Dosismessgerät eine Kapsel aus Tantal oder einer bimetallischen Struktur aus Tantal und einem anderen Metall, z. B. Blei, als Filter einzusetzen, wobei die einfache Filterstruktur wesentliche Vorteile habe. Weiterhin wird vorgeschlagen, die Enden der Kapsel mit einer Umhüllung zu versehen, die aus einem polymerisierten Kohlenwasserstoff, insbesondere aus Polyethylen, Polypropylen oder einem anderen Polyolefin, besteht. Die Umhüllung dient dazu, um das Dosismessgerät gegenüber Staub, Feuchtigkeit und UV-Strahlung abzuschirmen.

Es besteht folglich ein Bedarf an Dosismessgeräten, welche die Augenlinsendosis mit einfachen Anordnungen präzise messen können. Beispielsweise wird in der US 5,065,031 A ein Dosismessgerät und ein Verfahren offenbart, die zur Bestimmung einer Augenlinsendosis verwendet werden können, wobei das Dosismessgerät mehrere thermolumineszente Materialien umfasst. Weitere derartige Dosismessgeräte und Verfahren zur Bestimmung der Augenlinsendosis sind aus GB 2 227 633 A und der DE 20 2014 005 506 U1 bekannt. Darüber hinaus offenbaren DE 699 28 750 T2 und WO 98/58244 A weitere Dosismessgeräte und Verfahren zur Bestimmung einer Strahlendosis, welche sich jedoch nicht für die Bestimmung der Augenlinsendosis eignen.

Bilski P, et al., The new EYE-D™ dosemeter for measurements of Hp(3) for medical staff", Radiation Measurements, Bd. 46, Nr. 11 , Seiten 1239-1242, beschreibt ein Dosimeter, umfassen einen Thermolumineszenz-Detektor und eine Kapsel aus Polyamid, Polymethylmethacrylat oder Polyvinylchlorid, wobei die Kapsel, um einen möglichst gute Energie- und Winkelantwort zu liefern, in Form einer hohlen Halbkugel vorliegt.

Trotz der aus dem Stand der Technik bekannten Dosismessgeräte weisen diese noch ein Verbesserungspotential auf. Insbesondere wäre es wünschenswert, ein Dosismessgerät und/oder eine Dosismessvorrichtung bereitzustellen, welche eine direkte Angabe der Messgröße *H*ₚ(3) erlaubt.

### Offenbarung der Erfindung

Es werden daher ein Dosismessgerät, ein Stirnband, eine Dosismessvorrichtung und ein Verfahren zur Bestimmung mindestens einer Messgröße Hₚ(3) an einer Augenlinse mit den Merkmalen der unabhängigen Ansprüche vorgeschlagen, welche die aus dem Stand der Technik bekannten Nachteile und Einschränkungen zumindest teilweise vermeiden. Vorteilhafte Weiterbildungen ergeben sich aus den jeweils zugehörigen abhängigen Ansprüchen.

In einem ersten Aspekt betrifft die vorliegende Erfindung ein Dosismessgerät gemäß Anspruch 1. Das Dosismessgerät umfasst einen Detektor zur Detektion Photonen- und Beta-Strahlung, welche insbesondere Energien von größer als 0,7 MeV aufweisen, und ein Paar einer Filterkombination. Der Begriff des "Paares" bezeichnet hierbei, dass erfindungsgemäß zwei Filterkombinationen vorhanden sind, wobei die beiden Filterkombinationen besonders bevorzugt gleichartig ausgestaltet sind. Jede Filterkombination umfasst hierbei mindestens einen ersten Filter und mindestens einen zweiten Filter. Jede Filterkombination ist hierbei derart angeordnet, dass die Strahlung vor Eintritt in den Detektor den ersten Filter und den zweiten Filter durchdringt.

Unter einer "Strahlung" ist grundsätzlich eine Ausbreitung von energieübertragenden Wellen oder von Partikeln zu verstehen. Ionisierende Strahlung tritt im Allgemeinen aus einer radioaktiven Substanz oder einer Vorrichtung zur Erzeugung von Röntgenstrahlung aus. Die radioaktive Substanz kann instabile Atomkerne umfassen, welche überschüssige Energie in Form von elektromagnetischen Wellen oder Partikeln emittieren. Als Beispiel für die Partikelstrahlung ist "Beta-Strahlung" zu nennen. Bei dieser Strahlenart können insbesondere zwei verschiedene Arten von Betazerfällen auftreten, Beta-Minus-Zerfälle und Beta-Plus-Zerfälle. Bei den Beta-Minus-Zerfällen zerfallen Atomkerne mit einem Überschluss an Neutronen in Protonen, Elektronen und Anti-Neutrinos, während bei den Beta-Plus-Zerfällen Atomkerne mit einem Überschuss an Protonen in Neutronen, Positronen und Neutrinos zerfallen. Weiterhin kann beispielsweise Photonenstrahlung emittiert werden, wobei diese Strahlenart auch als Wellenstrahlung bezeichnet werden kann. Der Begriff der "Photonenstrahlung" bezeichnet in diesem Zusammenhang eine Emission von Photonen aus einer radioaktiven Substanz und wird auch als "Gamma-Strahlung" bezeichnet.

Bei einem Eindringen der Strahlung beispielsweise in ein Material und/oder in ein Gewebe eines menschlichen Körpers kann ein Energieübertrag auf das Material beziehungsweise das Gewebe stattfinden. In einer Schicht des Materials und/oder des Gewebes kann in Folge des Eindringens der Strahlung eine Ionisierung auftreten. Als Maß für den Energieübertrag pro Masse wird im Strahlenschutz üblicherweise der Begriff Dosis verwendet.

Der Detektor ist weiterhin dazu eingerichtet, um eine Beta-Strahlung, welche insbesondere Energien von größer als 0,7 MeV aufweist, und eine Photonenstrahlung zu detektieren. Der Detektor kann hierzu mindestens ein thermo lumineszenzfähiges Material umfassen. Hierbei kann der Detektor insbesondere in Form eines Körpers, vorzugsweise in Form eines Quaders, ausgestaltet sein, wobei das thermolumineszenzfähige Material, wie aus dem Stand der Technik bekannt, für den Nachweis der Strahlung eingesetzt wird.

Das thermolumineszenzfähige Material kann ausgewählt sein aus der Gruppe: Lithiumfluorid, Calciumfluorid, Calciumsulfat oder Berylliumoxid. Das thermolumineszenzfähige Material kann hierbei insbesondere als Kristall ausgebildet sein. Als "Thermolumineszenz" wird im Sinne der vorliegenden Erfindung eine Eigenschaft eines Materials bezeichnet, bei einem Vorgang des Erhitzens, die zuvor aufgenommene Strahlungsenergie in Form von sichtbarem Licht abzugeben.

Der Detektor kann weiterhin mindestens eine Detektorfläche aufweisen. Der Begriff "Detektorfläche" bezeichnet insbesondere eine Seite des Detektors, welche insbesondere der einfallenden Strahlung zugewandt sein kann. Vorzugsweise kann die Detektorfläche als eine planare Ebene ausgebildet sein. Die Detektorfläche kann beispielsweise eine rechteckige Form oder eine runde Form aufweisen. Auch andere Ausführungsformen sind hierbei denkbar.

Die Filterkombination umfasst mindestens einen ersten Filter und mindestens einen zweiten Filter. Unter der "Filterkombination" ist hierbei ein Vorhandensein von zwei räumlich getrennt voneinander angeordneten Filtern zu verstehen, wobei sich der erste Filter und der zweite Filter in mindestens einer ihrer physikalischen und/oder chemischen Eigenschaften und/oder ihrer Zusammensetzung und/oder ihres Aufbaus voneinander unterscheiden. Durch die unterschiedlichen physikalischen und chemischen Eigenschaften können die Filter unterschiedliche Absorptionsvermögen aufweisen und somit die Strahlung abhängig von der Energie teilweise oder vollständig abschwächen. Der erste Filter und/oder der zweite Filter können daher dazu eingerichtet sein, um die Strahlung nach bestimmten Kriterien zu selektieren. Hierdurch kann sich beispielsweise eine Intensität der Strahlung reduzieren lassen. Der erste Filter und der zweite Filter können miteinander verklebt sein, insbesondere derart, dass der erste Filter und der zweite Filter stoffschlüssig miteinander verbunden sein können. Alternativ können der erste Filter und der zweite Filter derart angeordnet sein, dass sich zwischen dem ersten Filter und dem zweiten Filter ein Fluid, insbesondere Luft, befinden kann.

Die Filterkombination ist derart angeordnet, dass die Strahlung vor Eintritt in den Detektor den ersten Filter und den zweiten Filter durchdringt. Insbesondere kann die Strahlung vor Eintritt in den Detektor zunächst den ersten Filter und anschließend den zweiten Filter durchdringen. Der erste Filter kann hierbei insbesondere dazu eingerichtet sein, um ein Überansprechvermögen in einem niederen Energiebereich der Strahlung zu kompensieren. Der zweite Filter kann insbesondere dazu eingerichtet sein, um den Detektor zu schützen. Der zweite Filter kann weiterhin dazu eingerichtet sein, um einen Gewebeanteil vor der Augenlinse, insbesondere einen Gewebeanteil mit einer Dicke von 3 mm, zu simulieren.

Jede Filterkombination kann die Detektorfläche vollständig bedecken. Hierunter wird eine Eigenschaft der Anordnung der Filterkombination in Bezug auf die Detektorfläche verstanden, bei welcher eine die Detektorfläche beaufschlagende Strahlung zuvor die Filterkombination vollständig durchdrungen hat.

Jede Filterkombination des Paares ist hierbei bezüglich mindestens einer Symmetrieachse des Dosismessgeräts und/oder bezüglich mindestens einer Symmetrieebene des Dosismessgeräts vorzugsweise symmetrisch angeordnet. Erfindungsgemäß ist hierzu jede Filterkombination des Paares auf jeweils einer Seite des Detektors symmetrisch bezüglich mindestens einer Symmetrieachse des Detektors und/oder bezüglich mindestens einer Symmetrieebene des Detektors angeordnet. Die symmetrische Anordnung des Paars der Filterkombination kann insbesondere dazu führen, dass das Dosismessgerät, da es keine vorgegebene Tragerichtung gibt, in einer beliebigen Ausrichtung bezüglich einer radioaktiven Quelle getragen werden kann und auf diese Weise ein Fehlerpotential verringert werden kann. Durch den beschriebenen symmetrischen Aufbau des Dosismessgeräts kann darüber hinaus auf ein Rückstreuelement im Dosismessgerät verzichtet werden.

Der Detektor ist dazu eingerichtet, um die Strahlung in einem Strahleneinfallswinkel von 0° bis 80°, bevorzugt von 0° bis 70°, besonders bevorzugt von 0° bis 60°, zu detektieren. Der Begriff "Strahleneinfallswinkel" bezeichnet hierbei einen Winkel zwischen der Strahlung und einem Lot, welches senkrecht zu der Detektorfläche ist. Hierzu ist eine der beaufschlagenden Strahlung zugewandte Oberfläche des ersten Filters und des zweiten Filters mit einer Wölbung versehen, um ein Ansprechvermögen des Detektors für die Strahlung in einem Strahleneinfallswinkel von 0° bis 80°, bevorzugt von 0° bis 70°, besonders bevorzugt von 0° bis 60°, zu ermöglichen.

Der erste Filter kann insbesondere Aluminium umfassen. Insbesondere in diesem Falle kann der erste Filter eine Dicke von 0,05 mm bis 2 mm aufweisen, bevorzugt eine Dicke von 0,1 mm bis 1 mm, besonders bevorzugt eine Dicke von 0,4 mm bis 0,7 mm, insbesondere eine Dicke von 0,55 mm. Auch andere Materialien sind denkbar, wobei in diesem Falle auch andere Werte für die Dicke des ersten Filters bevorzugt sein können.

Der zweite Filter kann mindestens ein Matrixmaterial umfassen, wobei dem Matrixmaterial mindestens ein Füllmaterial beigemischt sein kann. Das Füllmaterial kann dem Matrixmaterial insbesondere als Pulver beigemischt sein. Das Matrixmaterial kann ausgewählt sein aus der Gruppe bestehend aus: einem Polymermaterial, einem Kohlenwasserstoff, einem Papiermaterial, einem keramischen Material. Insbesondere kann das Matrixmaterial ausgewählt sein aus der Gruppe bestehend aus: Acrylnitril-Butadien-Styrol, Acrylnitril-Butadien-Polystyrol, Bristolkarton. Unter dem Begriff des "Bristolkartons" wird üblicherweise ein holzfreier, vorzugsweise beidseitig weiß gedeckter und geklebter Karton verstanden, welcher über eine Einlage aus 100 % Frischfaser verfügt. Das Matrixmaterial kann eine Flächendichte von 50 g/m² bis 500 g/m², insbesondere von 300 g/m², aufweisen. Auch andere Flächendichten sind denkbar.

Das Füllmaterial kann mindestens ein Niedrig-Z-Material umfassen, wobei das "Niedrig-Z-Material" ein chemisches Element mit einer Ordnungszahl von 39 bis 60 in elementarer Form oder als chemische Verbindung aufweisen kann. Das Füllmaterial kann insbesondere ausgewählt sein aus der Gruppe bestehend aus: Zinn, Antimon, Iod, Cäsium, Barium, Lanthan.

Das Dosismessgerät kann weiterhin mindestens ein Gehäuse zur Aufnahme der Filterkombination und/oder des Detektors umfassen. Der Begriff "Gehäuse" bezeichnet im Sinne der vorliegenden Erfindung ein beliebig geformtes Bauteil, welches vorzugsweise mindestens ein Kunststoffmaterial, insbesondere ein elastomeres Material, umfasst. Auch andere Materialien sind grundsätzlich denkbar. Das Gehäuse kann dabei ganz oder teilweise als Schlauch ausgebildet sein. Der Begriff "Schlauch" bezeichnet grundsätzlich einen beliebigen Hohlkörper, insbesondere einen länglichen Hohlkörper. Das Gehäuse kann hierbei mindestens einen Schrumpfschlauch umfassen. Der Begriff "Schrumpfschlauch" bezeichnet einen Schlauch, welcher sich unter Hitzeeinwirkung insbesondere stark zusammenziehen kann. Dadurch kann die Filterkombination und/oder der Detektor auf einfache, aber dauerhafte Weise von einer Umgebung elektrisch isoliert und/oder vor mechanischen Beschädigungen geschützt werden. Insbesondere um schädliche Halogen-Emissionen zu vermeiden, kann das Gehäuse dabei vorzugsweise ein halogenfreies Material umfassen. Weiterhin kann das Gehäuse eine Massendichte von 1 mg/cm² bis 20 mg/cm², bevorzugt von 5 mg/cm² bis 15 mg/cm², besonders bevorzugt von 7 mg/cm² bis 12 mg/cm², insbesondere von 10 mg/cm², aufweisen.

Das Dosismessgerät ist als Augenlinsendosimeter eingerichtet. Für diesen Zweck kann das Dosismessgerät in einem Bereich einer Augenlinse eines Menschen positionierbar sein. Insbesondere kann das Dosismessgerät an einer Stirn des Menschen auf einer zu einer Anlage gerichteten Seite positionierbar sein, wobei die Anlage eingerichtet sein kann, um die Strahlung zu emittieren.

In einem weiteren Aspekt betrifft die vorliegende Erfindung ein Stirnband, welches mindestens ein Dosismessgerät nach einer der Ausführungsformen, die oben bereits ausgeführt wurden oder im Folgenden noch beschrieben werden, umfasst. Der Begriff "Stirnband" bezeichnet im Sinne der vorliegenden Erfindung einen Körper, welcher über eine geringe Dicke, eine begrenzte Breite und eine Länge, welcher im Wesentlichen dem Kopfumfang eines Menschen in Stirnhöhe entspricht, verfügt. Das Stirnband kann vorzugsweise aus einem elastischen Material hergestellt sein, insbesondere aus einem elastischen Textil. Das Stirnband kann vorzugsweise zum Tragen an der Stirn des Menschen eingerichtet sein.

Das Stirnband kann insbesondere dazu eingerichtet sein, um als ein Befestigungsmittel das mindestens eine Dosismessgerät an einer Position an der Stirn zu fixieren. Besonders vorteilhaft kann hierbei eine Ausgestaltung sein, in welcher zwei gesonderte Dosismessgeräte vorgesehen sind, welche jeweils in Nähe eines der beiden Augen angeordnet sein können.

In einem weiteren Aspekt betrifft die vorliegende Erfindung eine Dosismessvorrichtung, welche mindestens ein Dosismessgerät nach einer der Ausführungsformen, die oben bereits ausgeführt wurden oder im Folgenden beschrieben werden, umfasst. Weiterhin umfasst die Dosismessvorrichtung mindestens eine Auswertevorrichtung, welche zum Auslesen des Dosismessgeräts eingerichtet ist. Der Begriff "Auswertevorrichtung" bezeichnet im Sinne der vorliegenden Erfindung ein vorzugsweise elektronisches Gerät, welches dazu ausgestattet ist, um mindestens ein Signal, insbesondere ein elektrisches Signal zu detektieren. Insbesondere kann die Auswertevorrichtung zur Bestimmung mindestens einer Messgröße *H*ₚ(3) eingerichtet sein. Wie eingangs bereits erwähnt, bezeichnet die Messgröße *H*ₚ(3) im Sinne der vorliegenden Erfindung ein Wert für eine Dosis in einer Tiefe von 3 mm in einem menschlichen Körper unterhalb einer Stelle, an welcher sich die Dosismessvorrichtung befindet. Insbesondere kann die Messgröße *H*ₚ(3) geeignet sein, um eine Dosis für Augenlinsen zu erfassen. Für weitere Einzelheiten in Bezug auf Definitionen der hier verwendeten Begriffe aus der Dosimetrie wird auf die eingangs zitierte Empfehlung der ICRP sowie auf die eingangs genannte Norm DIN 6814-3: 2014-03 verwiesen.

In einem weiteren Aspekt betrifft die vorliegende Erfindung ein Verfahren zur Bestimmung mindestens einer Messgröße Hₚ(3) an einer Augenlinse. Das Verfahren kann die Verfahrensschritte, welche im Folgenden beschrieben werden, umfassen. Die Verfahrensschritte können vorzugsweise in der vorgegebenen Reihenfolge durchgeführt werden. Weiterhin können ein oder sogar mehrere Verfahrensschritte gleichzeitig oder zeitlich überlappend durchgeführt werden. Weiterhin können einer oder beide der Verfahrensschritte einfach oder auch wiederholt durchgeführt werden. Das Verfahren kann darüber hinaus noch weitere Verfahrensschritte umfassen.

Das Verfahren zur Bestimmung mindestens einer Messgröße Hₚ(3) an einer Augenlinse umfasst die folgenden Schritte:
a) Erfassen der Messgröße Hₚ(3) an der Augenlinse unter Verwendung mindestens eines Dosismessgeräts nach einem der Ausführungsformen, die oben bereits ausgeführt wurden oder im Folgenden noch beschrieben werden,
b) Bestimmen der Messgröße Hₚ(3) an der Augenlinse unter Verwendung einer Dosismessvorrichtung nach einer der Ausführungsformen, die oben bereits ausgeführt wurden oder im Folgenden beschrieben werden.

Das vorgeschlagene Dosismessgerät, das Stirnband, die Dosismessvorrichtung und das Verfahren zur Bestimmung mindestens einer Messgröße Hₚ(3) an einer Augenlinse weisen gegenüber bekannten Vorrichtungen und Verfahren zahlreiche Vorteile auf. Das Dosismessgerät ist insbesondere klein, flexibel und dadurch angenehm auf der Stirn zu tragen, ohne dass eine Sicht behindert wird. Es kann grundsätzlich in Photonen-Strahlenfeldern, Beta-Strahlenfeldern oder in Mischstrahlenfeldern, welche sowohl Photonen als auch Beta-Strahlen umfassen, eingesetzt werden. Zudem wird eine direkte Ausgabe des *H*ₚ(3)-Messwerts in der Dosismessvorrichtung ermöglicht. Die Erfassung der Strahlenbelastung kann dabei unabhängig von einer Ausrichtung des Dosismessgeräts relativ zu einer strahlungsaktiven Quelle erfolgen.

### Kurze Beschreibung der Figur

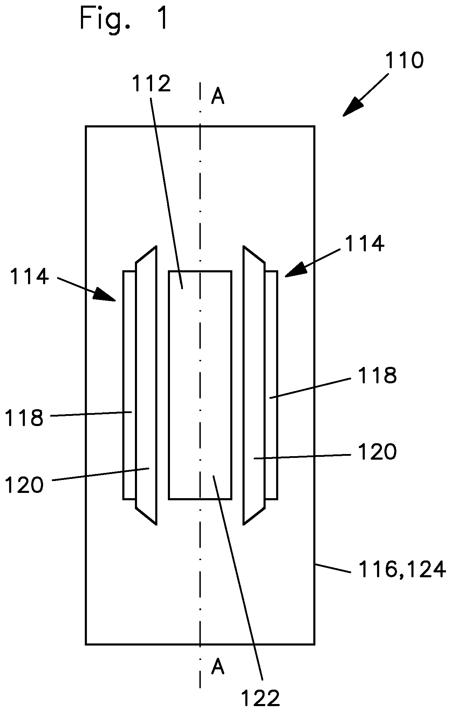

Figur 1 zeigt ein exemplarisches Beispiel eines Dosismessgeräts 110 in Schnittdarstellung. Es kann insbesondere dazu eingesetzt werden, um eine Messgröße *H*ₚ(3) zu erfassen. Das Dosismessgerät 110 umfasst hierbei einen Detektor 112 zur Detektion von Strahlung, insbesondere von elektromagnetischer und/oder Partikelstrahlung aus mindestens einer radioaktiven Quelle und ein Paar einer Filterkombination 114. Die Erfassung der Messgröße *H*ₚ(3) wird durch einen symmetrischen Aufbau des Dosismessgeräts 110 und durch den Einsatz des Paares der Filterkombination 114 erreicht. Das Dosismessgerät 110 kann weiterhin mindestens ein Gehäuse 116 umfassen.

Jede Filterkombination 114 umfasst mindestens einen ersten Filter 118 und mindestens einen zweiten Filter 120. In diesem Beispiel kann der erste Filter 118 Aluminium aufweisen. Weiterhin kann der erste Filter eine Dicke von 0,05 mm bis 2 mm aufweisen, bevorzugt eine Dicke von 0,1 mm bis 1 mm, besonders bevorzugt eine Dicke von 0,4 mm bis 0,7 mm, insbesondere eine Dicke 0,55 mm. In diesem Beispiel kann der zweite Filter 120 mindestens ein Matrixmaterial umfassen. Das Matrixmaterial kann ausgewählt sein aus der Gruppe bestehend aus: einem Polymermaterial, einem Kohlenwasserstoff, einem Papiermaterial, einem keramischen Material. Insbesondere kann das Matrixmaterial in diesem Beispiel ausgewählt sein aus der Gruppe bestehend aus: Acrylnitril-Butadien-Styrol, Acrylnitril-Butadien-Polystyrol, Bistrolkarton. Das Matrixmaterial kann eine Flächendichte von 50 g/m² bis 500 g/m² aufweisen, wobei ein Wert von 300 g/m² bevorzugt ist.

Jede Filterkombination 114 ist derart angeordnet, dass die Strahlung vor Eintritt in den Detektor 112 den ersten Filter 118 und den zweiten Filter 120 durchdringt. Insbesondere kann jede Filterkombination 114 derart angeordnet sein, dass die Strahlung vor dem Eintritt in den Detektor 112 zunächst den ersten Filter 118 und anschließend den zweiten Filter durchdringt. Der Detektor kann mindestens eine Detektorfläche 122 aufweisen. Jede Filterkombination 114 kann die Detektorfläche vollständig bedecken. In der Darstellung gemäß Figur 1 weisen sowohl der erste Filter 118 als auch der zweite Filter 120 eine flache Oberfläche auf. Erfindungsgemäß (nicht dargestellt) ist jedoch die der beaufschlagenden Strahlung zugewandte Oberfläche des ersten Filters 118 und des zweiten Filters 120 mit einer Wölbung versehen, welche ein Ansprechvermögen des Detektors für die Strahlung in einem Strahleneinfallswinkel von 0° bis 80°, bevorzugt von 0° bis 70°, besonders bevorzugt von 0° bis 60°, ermöglichen kann.

Weiterhin ist jede Filterkombination 114 des Paares symmetrisch bezüglich mindestens einer Symmetrieachse des Dosismessgeräts 110 und/oder bezüglich mindestens einer Symmetrieebene des Dosismessgeräts 110 angeordnet. Wie schematisch in Figur 1 dargestellt, ist hierzu jede Filterkombination 114 des Paares auf jeweils einer Seite des Detektors 112 symmetrisch bezüglich mindestens einer Symmetrieachse des Detektors 112 und/oder bezüglich mindestens einer Symmetrieebene des Detektors 112 angeordnet. Beispielsweise können das Dosismessgerät 110 und der Detektor 112 symmetrisch bezüglich einer Achse A-A angeordnet sein. Der symmetrische Aufbau ermöglicht es, das Dosismessgeräts 110 in einer beliebigen Ausrichtung bezüglich einer radioaktiven Quelle zu tragen, um auf diese Weise ein Fehlerpotential zu verringern. Darüber hinaus kann so auf ein Rückstreuelement verzichtet werden.

Der Detektor 112 kann mindestens ein thermolumineszenzfähiges Material umfassen. Das thermolumineszenzfähige Material kann in diesem Beispiel ausgewählt sein aus der Gruppe: Lithiumfluorid, Calciumfluorid. Der Detektor 112 ist weiterhin eingerichtet, um die Strahlung in einem Strahleinfallswinkel von 0° bis 80°, insbesondere von 0° bis 70°, insbesondere von 0° bis 60°, zu detektieren. Der Detektor 112 ist weiterhin eingerichtet, um eine Beta-Photonenstrahlung zu detektieren.

Das Gehäuse 116 kann mindestens ein Kunststoffmaterial, insbesondere ein elastomeres Material, umfassen. Das Gehäuse 116 kann hierbei mindestens einen Schrumpfschlauch 124 umfassen.

### Bezugszeichenliste

- 110: Dosismessgerät
- 112: Detektor
- 114: Filterkombination
- 116: Gehäuse
- 118: erster Filter
- 120: zweiter Filter
- 122: Detektorfläche
- 124: Schrumpfschlauch

## Patentansprüche

1. Dosismessgerät (110) zur Erfassung mindestens einer Messgröße Hₚ(3) an einer Augenlinse, umfassend einen Detektor (112) zur Detektion von Beta-Strahlung und von Photonenstrahlung, und ein Paar einer Filterkombination (114), wobei jede Filterkombination (114) auf jeweils einer Seite des Detektors (112) symmetrisch bezüglich mindestens einer Symmetrieachse des Detektors (112) und/oder bezüglich mindestens einer Symmetrieebene des Detektors (112) angeordnet ist, wobei jede Filterkombination (114) mindestens einen ersten Filter (118) und mindestens einen zweiten Filter (120) umfasst, wobei jede Filterkombination (114) derart angeordnet ist, dass die Strahlung vor Eintritt in den Detektor (112) den ersten Filter (118) und den zweiten Filter (120) durchdringt, wobei eine der beaufschlagenden Strahlung zugewandte Oberfläche des ersten Filters (118) und des zweiten Filters (120) mit einer Wölbung versehen ist und wobei sich der erste Filter (118) und der zweite Filter (120) in mindestens einer ihrer physikalischen und/oder chemischen Eigenschaften und/oder ihrer Zusammensetzung voneinander unterscheiden.

2. Dosismessgerät (110) nach dem vorhergehenden Anspruch, wobei jede Filterkombination (114) derart angeordnet ist, dass die Strahlung vor dem Eintritt in den Detektor (112) zunächst den ersten Filter (118) und anschließend den zweiten Filter (120) durchdringt.

3. Dosismessgerät (110) nach einem der vorhergehenden Ansprüche, wobei der Detektor (112) mindestens eine Detektorfläche (122) aufweist, wobei jede Filterkombination (114) die Detektorfläche (122) vollständig bedeckt.

4. Dosismessgerät (110) nach einem der vorhergehenden Ansprüche, wobei die Filterkombination (114) symmetrisch bezüglich mindestens einer Symmetrieachse des Dosismessgeräts (110) und/oder bezüglich mindestens einer Symmetrieebene des Dosismessgeräts (110) angeordnet ist.

5. Dosismessgerät (110) nach einem der vorhergehenden Ansprüche, wobei der erste Filter (118) Aluminium umfasst.

6. Dosismessgerät (110) nach einem der vorhergehenden Ansprüche, wobei der erste Filter (118) eine Dicke von 0.05 mm bis 2 mm aufweist.

7. Dosismessgerät (110) nach einem der vorhergehenden Ansprüche, wobei der zweite Filter (120) mindestens ein Matrixmaterial umfasst, wobei das Matrixmaterial ausgewählt ist aus der Gruppe bestehend aus: einem polymeren Material, einem Papiermaterial, ein keramisches Material.

8. Dosismessgerät (110) nach dem vorhergehenden Anspruch, wobei das Matrixmaterial ausgewählt ist aus: Acrylnitril-Butadien-Styrol, Acrylnitril-Butadien-Polystyrol oder Bristolkarton.

9. Dosismessgerät (110) nach dem vorhergehenden Anspruch, wobei dem Matrixmaterial mindestens ein Füllmaterial beigemischt ist, wobei das Füllmaterial ausgewählt ist aus: Zinn, Antimon, Iod, Cäsium, Barium oder Lanthan.

10. Dosismessgerät (110) nach einem der vorhergehenden Ansprüche, wobei der Detektor (112) eingerichtet ist, um die Strahlung in einem Strahleneinfallswinkel von 0° bis 60° zu detektieren.

11. Dosismessgerät (110) nach einem der vorhergehenden Ansprüche, wobei der erste Filter (118) dazu eingerichtet ist, um ein Überansprechvermögen in einem niederen Energiebereich der Strahlung zu kompensieren, und wobei der zweite Filter (120) dazu eingerichtet ist, um den Detektor (112) zu schützen und um einen Gewebeanteil vor der Augenlinse mit einer Dicke von 3 mm zu simulieren.

12. Stirnband, umfassend mindestens ein Dosismessgerät (110) nach einem der vorhergehenden Ansprüche.

13. Dosismessvorrichtung, umfassend mindestens ein Dosismessgerät (110) nach einem der vorhergehenden, ein Dosismessgerät (110) betreffenden Ansprüche, weiterhin umfassend mindestens eine Auswertevorrichtung, wobei die Auswertevorrichtung zum Auslesen des Dosismessgeräts (110) eingerichtet ist.

14. Dosismessvorrichtung nach dem vorhergehenden Anspruch, eingerichtet zur Bestimmung mindestens einer Messgröße *H*ₚ(3).

15. Verfahren zur Bestimmung mindestens einer Messgröße Hₚ(3) an einer Augenlinse, umfassend die Schritte
a) Erfassen der Messgröße Hₚ(3) an der Augenlinse unter Verwendung mindestens eines Dosismessgeräts (110) nach einem der vorhergehenden, ein Dosismessgerät (110) betreffenden Ansprüche,
b) Bestimmen der Messgröße *H*ₚ(3) an der Augenlinse unter Verwendung einer Dosismessvorrichtung nach einem der vorhergehenden, eine Dosismessvorrichtung betreffenden Ansprüche.

## Claims

1. Dose measurement device (110) for recording at least one measured variable Hₚ(3) on an eye lens, comprising a detector (112) for detecting beta radiation and photon radiation, and a pair of a filter combination (114), wherein each filter combination (114) is arranged, on a respective side of the detector (112), symmetrically with respect to at least one axis of symmetry of the detector (112) and/or with respect to at least one plane of symmetry of the detector (112), wherein each filter combination (114) comprises at least one first filter (118) and at least one second filter (120), wherein each filter combination (114) is arranged in a manner that the radiation passes through the first filter (118) and the second filter (120) before entering the detector (112), wherein a surface, facing the incident radiation, of the first filter (118) and of the second filter (120) is provided with a curvature, and wherein the first filter (118) and the second filter (120) differ from each other in terms of at least one of their physical and/or chemical properties and/or their composition.

2. Dose measurement device (110) according to the preceding claim, wherein each filter combination (114) is arranged in a manner that the radiation firstly passes through the first filter (118) and then passes through the second filter (120) before entering the detector (112) .

3. Dose measurement device (110) according to any one of the preceding claims, wherein the detector (112) has at least one detector surface (122), wherein each filter combination (114) completely covers the detector surface (122) .

4. Dose measurement device (110) according to any one of the preceding claims, wherein the filter combination (114) is arranged symmetrically with respect to at least one axis of symmetry of the dose measurement device (110) and/or about at least one plane of symmetry of the dose measurement device (110).

5. Dose measurement device (110) according to any one of the preceding claims, wherein the first filter (118) comprises aluminium.

6. Dose measurement device (110) according to any one of the preceding claims, wherein the first filter (118) has a thickness of 0.05 mm to 2 mm.

7. Dose measurement device (110) according to any one of the preceding claims, wherein the second filter (120) comprises at least one matrix material, wherein the matrix material is selected from the group consisting of: a polymer material, a paper material, a ceramic material.

8. Dose measurement device (110) according to the preceding claim, wherein the matrix material is selected from: acrylonitrile butadiene styrene, acrylonitrile butadiene polystyrene, or Bristol board.

9. Dose measurement device (110) according to the preceding claim, wherein at least one filler material is added to the matrix material, wherein the filler material is selected from: tin, antimony, iodine, caesium, barium or lanthanum.

10. Dose measurement device (110) according to any one of the preceding claims, wherein the detector (112) is configured to detect the radiation at a radiation angle of incidence of 0° to 60°.

11. Dose measurement device (110) according to any one of the preceding claims, wherein the first filter (118) is configured to compensate a crosstalk capability in a low energy range of the radiation, and wherein the second filter (120) is configured to protect the detector (112) and to simulate a tissue component in front of the eye lens with a thickness of 3 mm.

12. Headband, comprising at least one dose measurement device (110) according to any one of the preceding claims.

13. Dosimeter, comprising at least one dose measurement device (110) according to any one of the preceding claims relating to a dose measurement device (110), furthermore comprising at least one evaluation device, wherein the evaluation device is configured to read the dose measurement device (110).

14. Dosimeter according to the preceding claim, configured to determine at least one measured variable Hₚ(3).

15. Method for determining at least one measured variable Hₚ(3) on an eye lens, comprising the steps of
a) recording the measured variable Hₚ(3) on the eye lens using at least one dose measurement device (110) according to any one of the preceding claims relating to a dose measurement device (110),
b) determining the measured variable Hₚ(3) on the eye lens using a dosimeter according to any one of the preceding claims relating to a dosimeter.

## Revendications

1. Dosimètre (110) destiné à acquérir au moins une grandeur mesurée Hₚ(3) au niveau d'une lentille ophtalmique, comprenant un détecteur (112) destiné à détecter un rayonnement bêta et un rayonnement photonique, et une paire de combinaisons de filtres (114), chaque combinaison de filtres (114) étant disposée respectivement sur un côté du détecteur (112) de manière symétrique par rapport à au moins un axe de symétrie du détecteur (112) et/ou par rapport à au moins un plan de symétrie du détecteur (112), chaque combinaison de filtres (114) comportant au moins un premier filtre (118) et au moins un deuxième filtre (120), chaque combinaison de filtres (114) étant disposée de telle sorte que le rayonnement traverse le premier filtre (118) et le deuxième filtre (120) avant de pénétrer dans le détecteur (112), une surface du premier filtre (118) et du deuxième filtre (120) qui fait face au rayonnement sollicitant étant pourvue d'un bombement, et le premier filtre (118) et le deuxième filtre (120) se différentiant l'un de l'autre au moins par l'une de leurs propriétés physiques et/ou chimiques et/ou par leur composition.

2. Dosimètre (110) selon la revendication précédente, chaque combinaison de filtres (114) étant disposée de telle sorte que le rayonnement traverse d'abord le premier filtre (118) et ensuite le deuxième filtre (120) avant de pénétrer dans le détecteur (112).

3. Dosimètre (110) selon l'une des revendications précédentes, le détecteur (112) possédant au moins une surface de détecteur (122), chaque combinaison de filtres (114) recouvrant entièrement la surface de détecteur (122) .

4. Dosimètre (110) selon l'une des revendications précédentes, la combinaison de filtres (114) étant disposée de manière symétrique par rapport à au moins un axe de symétrie du dosimètre (110) et/ou par rapport à au moins un plan du dosimètre (110).

5. Dosimètre (110) selon l'une des revendications précédentes, le premier filtre (118) comprenant de l'aluminium.

6. Dosimètre (110) selon l'une des revendications précédentes, le premier filtre (118) présentant une épaisseur de 0,05 mm à 2 mm.

7. Dosimètre (110) selon l'une des revendications précédentes, le deuxième filtre (120) comportant au moins un matériau matriciel, le matériau matriciel étant choisi dans le groupe composé de : un matériau polymère, un matériau papier, un matériau céramique.

8. Dosimètre (110) selon la revendication précédente, le matériau matriciel étant choisi parmi : acrylonitrile-butadiène-styrol, acrylonitrile-butadiène-polystyrène, ou carton bristol.

9. Dosimètre (110) selon la revendication précédente, au moins un matériau de charge étant mélangé au matériau matriciel, le matériau de charge étant choisi parmi : étain, antimoine, iode, césium, baryum, et lanthane.

10. Dosimètre (110) selon l'une des revendications précédentes, le détecteur (112) étant conçu pour détecter le rayonnement dans un angle d'incidence de rayonnement de 0° à 60°.

11. Dosimètre (110) selon l'une des revendications précédentes, le premier filtre (118) étant conçu pour compenser une capacité de surréaction dans une plage énergétique basse du rayonnement, et le deuxième filtre (120) étant conçu pour protéger le détecteur (112) et pour simuler une part de tissu ayant une épaisseur de 3 mm devant la lentille ophtalmique.

12. Serre-tête, comprenant au moins un dosimètre (110) selon l'une des revendications précédentes.

13. Dispositif de dosimétrie, comprenant au moins un dosimètre (110) selon l'une des revendications précédentes concernant un dosimètre (110), comprenant en outre au moins un dispositif d'interprétation, le dispositif d'interprétation étant conçu pour lire le dosimètre (110).

14. Dispositif de dosimétrie selon la revendication précédente, conçu pour déterminer au moins une grandeur mesurée Hₚ(3).

15. Procédé de détermination d'au moins une grandeur mesurée Hₚ(3) au niveau d'une lentille ophtalmique, comprenant les étapes suivantes
a) acquisition de la grandeur mesurée Hₚ(3) au niveau de la lentille ophtalmique en utilisant au moins un dosimètre (110) selon l'une des revendications précédentes concernant un dosimètre (110),
b) détermination de la grandeur mesurée Hₚ(3) au niveau de la lentille ophtalmique en utilisant un dispositif de dosimétrie selon l'une des revendications précédentes concernant un dispositif de dosimétrie.
